# FASCICULE DE BREVET EUROPEEN

(11) **EP 0 708 394 B1**
(45) Date de publication et mention de la délivrance du brevet: **16.12.1998**
(21) Numéro de dépôt: 95402295.0
(22) Date de dépôt: 13.10.1995
(51) Int. Cl.: G05D 1/06, G01C 23/00, G02B 27/01

(54) **Dispositif optoélectronique d'assistance au pilotage d'un aéronef**
Optoelektronische Vorrichtung zur Steuerungshilfe eines Flugzeuges
Optoelectronic device for assisting a pilot in steering an aircraft

(30) Priorité: 18.10.1994 FR 9412409
(43) Date de publication de la demande: 24.04.1996
(73) Titulaire: SEXTANT AVIONIQUE, 92360 Meudon-la-Forêt (FR)
(72) Inventeur: Coirier, Philippe, F-92402 Courbevoie Cedex (FR); Goujon, Alain, F-92402 Courbevoie Cedex (FR)
(74) Mandataire: Beylot, Jacques

(56) Documents cités:
- EP-A- 0 044 777
- EP-A- 0 545 473
- GB-A- 2 004 828
- US-A- 3 776 455
- US-A- 4 247 843
- US-A- 4 454 496

## Description

La présente invention concerne les dispositifs optoélectroniques d'aide au pilotage d'un aéronef par mauvaise visibilité, notamment, à l'atterrissage en approche finale et au décollage.

Les dispositifs optoélectroniques d'aide au pilotage d'un aéronef, avion ou hélicoptère, consistent en des collimateurs ou viseurs tête-haute présentant, devant les yeux du pilote, des informations graphiques et alphanumériques sous forme de réticules projetés sur une optique semi-réfléchissante en superposition avec la vue du monde extérieur.

Les performances obtenues à l'aide de ces dispositifs optoélectroniques d'aide au pilotage dépendent directement des caractéristiques des divers réticules présentés au pilote tant pour la capacité de surveillance globale de la situation que pour la précision des manoeuvres effectuées manuellement.

Les réticules habituellement affichés peuvent être classés en différentes familles selon les indications qu'ils donnent :
- éléments du "T basique" de la planche de bord (vitesse, attitude, cap, altitude),
- éléments proches de ceux du "T basique" (nombre de Mach, vitesse verticale (variomètre), radio-altitude),
- éléments liés à la trajectoire (vecteur vitesse, accélération, pente totale),
- éléments de radionavigation de zone (RNAV) permettant de suivre une route grâce à des balises radioélectriques(VOR, ILS, DME),
- éléments complémentaires de contrôle de situation ( consignes explicites (route, cap etc...), écarts par rapport à des consignes (vitesse etc...), indications de modes de fonctionnement, alarmes diverses etc...).

Dans le domaine de l'aviation civile, les collimateurs sont utilisés principalement pour les phases d'atterrissage, de roulage et de décollage par mauvaise visibilité. Ils permettent une réduction des minima opérationnels de visibilité et augmentent la sécurité des opérations grâce à une capacité accrue de surveillance de la situation. Ils apportent en outre une précision accrue de contrôle de la trajectoire en condition de vol à vue.

Dans les solutions actuelles, des représentations graphiques distinctes sont utilisées soit pour indiquer au pilote route et pente de consigne, soit pour lui fournir un moyen d'évaluation de la situation de sa trajectoire par rapport à ces consignes. En outre les échelles permettant d'évaluer pente ou assiette dites barres d'attitudes sont de résolution faible, de l'ordre de 5 voire 10 degrés typiquement. Enfin le contrôle et le maintien d'une trajectoire précise par condition de vent et de panne moteur restent délicats avec ces représentations.

En exemple, on peut se reporter à la demande de brevet européen EP 0 044 777 qui décrit un dispositif d'assistance au pilotage d'un aéronef comportant un collimateur de vol ou viseur tête haute affichant de nombreux symboles dont une ligne d'horizon artificielle graduée avec une échelle de cap, une échelle de pente grossière constituée de lignes parallèles à la ligne d'horizon artificielle correspondant à des écarts angulaires de +10°, +20°, -10°, -20°, un réticule fixe O matérialisant le centre de gravité de l'aéronef, un symbole mobile d'aéronef A repérant le vecteur vitesse avion, avec en outre, lorsque l'on est à proximité d'une piste d'atterrissage équipée d'un appareillage de guidage ILS, un symbole de piste et une fenêtre de guidage dans laquelle le pilote doit maintenir le symbole mobile d'aéronef A pour effectuer un atterrissage correct.

La profusion des symboles affichés, la localisation et le manque de finesse de l'échelle de pente ne permettent pas au pilote, au cours d'un atterrissage en approche finale, de la montée initiale au décollage ou d'une remise de gaz, alors qu'il a son attention concentrée sur le collimateur de vol au voisinage du symbole mobile d'aéronef A, de se faire une idée précise de la pente et de l'assiette de l'aéronef alors que la maîtrise de la pente et de l'assiette de l'aéronef est de la plus haute importance pour le contrôle et le maintien d'une trajectoire précise dans ces conditions de vol, surtout par vent de travers ou en cas de panne moteur

On peut également se reporter au brevet américain US 4 454 496 qui décrit un collimateur de vol pour aéronef affichant des symboles d'aide à l'atterrissage dont un symbole d'aéronef que le pilote doit maintenir sur un point de visée situé à l'intersection d'une ligne de visée parallèle à une ligne d'horizon artificiel et d'une ligne matérialisant l'axe de la piste d'atterrissage.

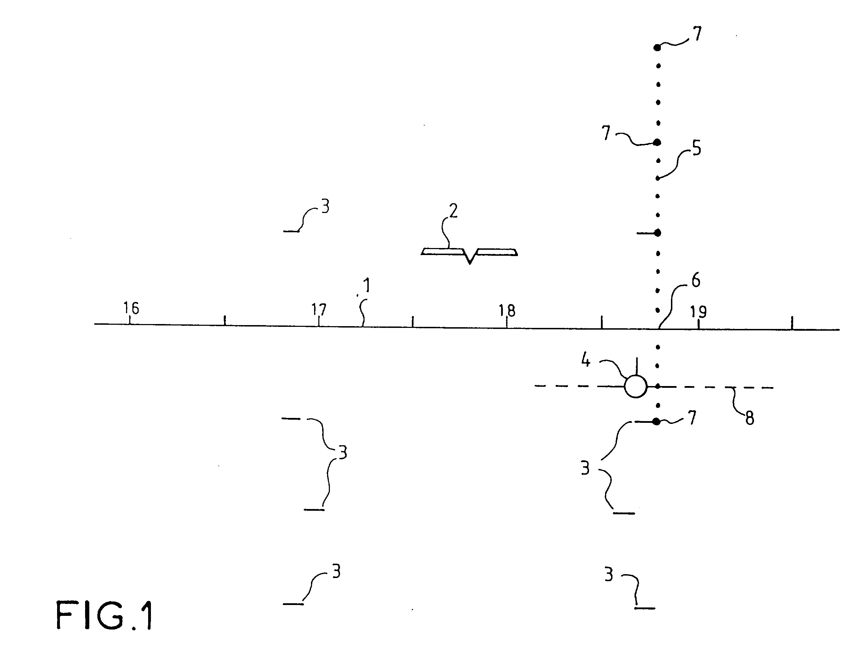

Ici, comme on peut s'en rendre compte à la vue de la figure 1 de ce document, les symboles affichés sont moins nombreux mais ils ne comportent aucune échelle de pente si bien que le pilote ne peut toujours pas se faire une idée précise de la pente et de l'assiette de l'aéronef pendant les phases critiques d'approche à l'atterrissage, de montée initiale au décollage ou de remise de gaz.

La présente invention a pour but d'améliorer les performances d'un collimateur utilisé en phase d'approche, d'atterrissage et de montée initiale au décollage comme en remise de gaz, grâce à un nouveau concept de représentation graphique des informations présentées qui permet d'augmenter le niveau de surveillance de la situation en général et le suivi de la trajectoire en particulier.

Elle a pour objet un dispositif optoélectronique d'assistance au pilotage d'un aéronef pourvu d'une centrale de navigation déterminant, entre autres, le cap, les assiettes longitudinale et latérale ainsi que le vecteur vitesse sol de l'aéronef, et d'un collimateur affichant une ligne d'horizon artificiel graduée avec une échelle de cap donnant une référence d'assiette et de pente nulle, un réticule repérant le vecteur vitesse sol et un réticule fixe constitué d'une maquette avion entourée de barres d'attitudes repérant les assiettes longitudinale et latérale de l'aéronef par rapport à la ligne d'horizon artificiel. Ce dispositif est remarquable en ce qu'il comporte des moyens d'affichage sur le collimateur d'une échelle de pente disposée en travers et de part et d'autre de la ligne d'horizon artificiel, à l'emplacement de la route sélectée choisie par le pilote.

Cette échelle de pente positionnée sur la ligne d'horizon artificiel, à l'emplacement de la route sélectée, permet la présentation simultanée au pilote des informations de Route Sélectée, de Pente et d'Assiette Longitudinale avec une grande précision.

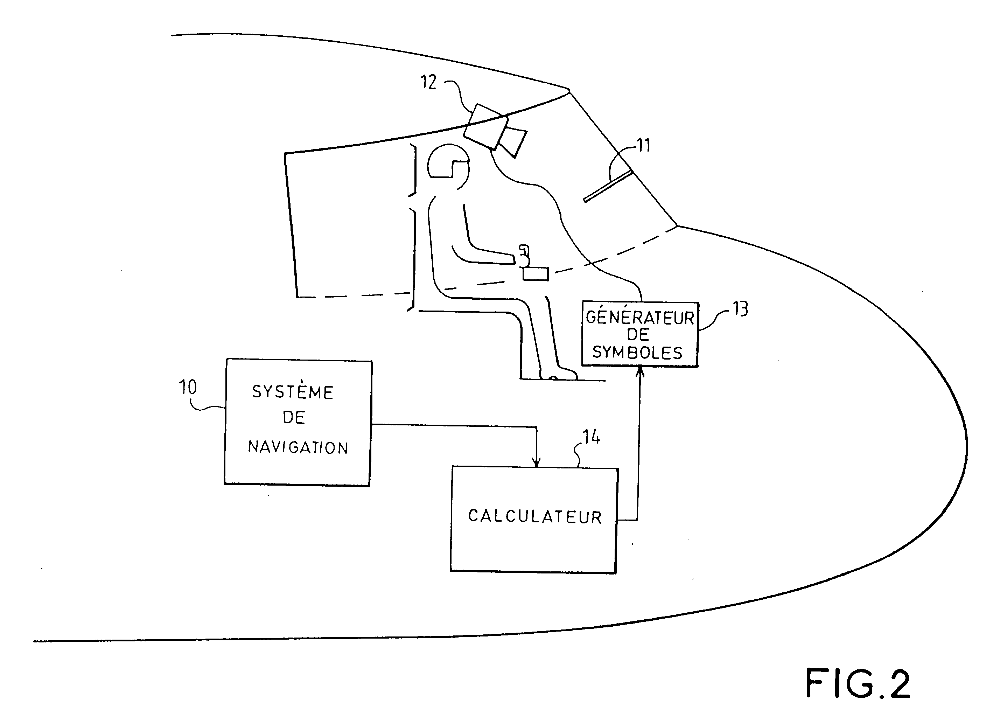

Cette échelle de pente positionnée sur la ligne d'horizon artificiel, à l'emplacement de la route sélectée par le pilote est avantageusement représentée par une ligne de points espacés d'un degré de pente, avec des points tous les cinq degrés de pente de taille plus importante que celle des points courants pour faciliter la lecture de l'échelle.
D'autres caractéristiques et avantages de l'invention ressortiront de la description ci-après d'un mode de réalisation donné à titre d'exemple. Cette description sera faite en regard du dessin dans lequel :
- une figure 1 est un schéma illustrant les réticules affichés sur un collimateur relatifs à la surveillance de la trajectoire et de l'attitude d'un aéronef, avec entre autres, le réticule affiché par le dispositif selon l'invention; et
- une figure 2 est un schéma illustrant l'architecture générale d'un dispositif selon l'invention à bord d'un aéronef.

Un collimateur se présente sous la forme d'un écran transparent au travers duquel le pilote regarde à l'extérieur. Sur cet écran transparent sont tracés différents réticules destinés à faciliter le pilotage. La figure 1 représente plus particulièrement les réticules permettant la surveillance de la route ainsi que des attitudes de l'aéronef et de la pente de la trajectoire. On y distingue un réticule dessinant une ligne horizontale 1 graduée avec une échelle de cap. Cette ligne horizontale 1 est la ligne d'horizon artificiel. Elle se déplace sous les indications du système de navigation. Une maquette avion 2 fixe, placée sur la référence longitudinale avion, dans le plan de symétrie du fuselage, permet, en liaison avec la ligne d'horizon artificiel 1, elle-même entourée de repères 3 dits barres d'attitudes, d'apprécier le cap de l'aéronef et, de manière grossière, les assiettes longitudinale et latérale de l'aéronef. Un autre réticule 4 matérialise, sous la forme d'un petit cercle ailé mobile, l'orientation du vecteur vitesse sol, en route et pente.

En plus de ces réticules classiques, on aperçoit, une ligne de points 5 tracée perpendiculairement à la ligne d'horizon artificiel 1, au cap 6 de la route sélectée par le pilote. Cette ligne de points 5 est une échelle de pente. Ses points, typiquement vingt au-dessus et cinq au-dessous de la ligne d'horizon artificiel 1, sont espacés d'un degré de pente. Les points 7, tous les cinq degrés de pente ont une taille double afin de faciliter la lecture le long de l'échelle. Le nombre de points au dessus de la référence d'horizon est représentatif de l'assiette longitudinale maximale admissible de l'avion en remise de gaz ou au décollage.

L'appréciation de la pente de la trajectoire de l'aéronef s'effectue par observation de la position du réticule 4 repérant le vecteur vitesse sol par rapport à l'échelle de pente de la ligne de points 5.

L'appréciation de l'assiette longitudinale de l'aéronef s'effectue par observation de la position du réticule de la maquette avion 2 par rapport à l'échelle de pente de la ligne de points 5.

Cette ligne de points 5 graduée avec une échelle de pente et placée au cap de la route sélectée par le pilote facilite, pour le pilote, la surveillance et le contrôle, simultanément dans le plan horizontal et dans le plan vertical, des paramètres suivants, cela avec une excellente précision pour tous les cas de vol courants et même en cas de vent latéral ou de panne moteur:
- pente actuelle ou écart relatif entre la pente actuelle et une pente de consigne,
- écart de cap entre la route actuelle et la route sélectée,
- assiette longitudinale.

Lors d'une phase finale d'approche d'une piste à l'atterrissage, en l'absence de vent et avant le toucher de roues, le réticule symbolisant le vecteur vitesse sol 4 et le réticule symbolisant la maquette avion 2 sont voisins de l'échelle de pente de la ligne de points 5 ce qui facilite l'utilisation simultanée de ces réticules pour la surveillance de la situation. En effet, dans ces circonstances, le réticule symbolisant le vecteur vitesse sol 4 et celui symbolisant la maquette avion 2 se rapprochent de la trajectoire de consigne qui est dans le plan vertical passant par le cap correspondant à la route sélectée, et sensiblement identique au cap de la piste.

Lors de l'arrondi final à l'atterrissage pour le toucher de roues, l'échelle de pente de la ligne de points 5 permet en outre, grâce à la résolution au degré près de sa graduation, d'améliorer la surveillance de l'exécution de la manoeuvre par vérification aisée de la remontée du réticule symbolisant le vecteur vitesse sol vers la référence d'horizon le long de l'échelle de points.

Sur la figure 1, on a représenté une situation opérationnelle. La maquette avion 2 et le vecteur vitesse sol 4 sont décalés d'un angle représentant la dérive due au vent latéral. Le contrôle de la situation à l'aide du réticule symbolisant une échelle de pente par une ligne de points 5 positionnée au cap de la route sélectée permet de dire qu'ici l'aéronef vole :
- à environ 1 degré à gauche de la route de consigne,
- à la pente de consigne de moins trois degrés donnée par un repère de pente 8, et
- à une assiette longitudinale d'environ plus quatre degrés.

Différentes variantes peuvent être apportées à la forme du réticule affichant l'échelle de pente au cap de la route sélectée. La ligne de points peut être remplacée par une autre représentation graphique. Elle peut être complétée, comme représentée, par une représentation explicite de la pente de consigne. La plage de représentation de l'échelle peut être plus étendue. La consigne de route peut être remplacée par une consigne de cap.

La figure 2 illustre l'architecture générale d'un équipement installé à bord d'un avion pour afficher aux yeux du pilote ce réticule symbolisant une échelle de pente positionnée au cap de la route sélectée. L'avion, dont on distingue la partie avant avec le poste de pilotage, est équipé avec un système de navigation 10 et un collimateur 11.

Le système de navigation 10 fournit les indications habituelles dont, notamment, le cap, le vecteur de la vitesse relative par rapport au sol, l'assiette longitudinale et l'assiette transversale.

Le collimateur comprend un écran transparent 11 qui est placé devant les yeux du pilote, en superposition avec le paysage, et sur lequel un dispositif de projection 12 vient afficher différents réticules relatifs au pilotage dont ceux représentés à la figure 1.

Le dispositif de projection 12 est piloté par un générateur de symboles 13 qui reçoit des commandes de mises à jour d'un calculateur 14 à logique programmée relié au système de navigation 10.

## Revendications

1. Dispositif optoélectronique d'assistance au pilotage d'un aéronef pourvu d'un système de navigation (10) déterminant, entre autres, le cap, les assiettes longitudinale et latérale ainsi que le vecteur vitesse sol de l'aéronef, et d'un collimateur (11) affichant une ligne d'horizon artificiel (1) graduée avec une échelle de cap et entourée de barres d'attitudes donnant une référence d'assiette de gite et de pente nulle, un réticule (4) repérant le vecteur vitesse sol et un réticule fixe (2) constitué d'une maquette avion repérant le cap et les assiettes longitudinale et latérale de l'aéronef par rapport à la ligne d'horizon artificiel, caractérisé en ce qu'il comporte des moyens d'affichage sur le collimateur (11) d'une échelle de pente disposée en travers et de part et d'autre de la ligne d'horizon artificiel (1), à l'emplacement du cap (6) de la route sélectée choisie par le pilote.

2. Dispositif selon la revendication 1, caractérisé en ce que la dite échelle de pente est perpendiculaire à la ligne d'horizon artificiel (1).

3. Dispositif selon la revendication 1, caractérisé en ce que lesdits moyens d'affichage d'une échelle de pente à l'emplacement du cap de la route sélectée affichent une ligne de points (5) en travers et de part et d'autre de la ligne d'horizon artificiel (1).

4. Dispositif selon la revendication 3, caractérisé en ce que les points de ladite ligne de points (5) sont régulièrement espacés selon un pas de graduation inférieur au degré de pente.

5. Dispositif selon la revendication 3, caractérisé en ce que les points de ladite ligne de points (5) sont régulièrement espacés selon un pas de un degré de pente et en ce que les points tous les cinq degrés de pente ont une taille supérieure à celle des points courants pour faciliter la lecture de l'échelle.

## Patentansprüche

1. Optoelektronische Vorrichtung zur Unterstützung des Piloten eines Flugzeugs, das ein Navigationssystem (10), welches unter anderem den Kurs, die Trimmung in Längs- und in Seitenrichtung sowie den Geschwindigkeitsvektor des Flugzeugs über Grund bestimmt, und einen Kollimator (11) enthält, der eine mit einer Kursskala versehene und von Fluglage-Balken, die einen Bezugswert des Rollwinkels und der Neigung null angeben, umgebene künstliche Horizontlinie (1), eine den Geschwindigkeitsvektor über Grund angebende Markierung (4) sowie eine feste Markierung (2) in Form eines Flugzeugsymbols anzeigt, das den Kurs und die Längs- und die Seitentrimmung des Flugzeugs bezüglich der künstlichen Horizontlinie angibt, dadurch gekennzeichnet, daß die Vorrichtung Mittel zur Anzeige einer Neigungsskala auf dem Kollimator (11) besitzt, die durch die künstliche Horizontlinie (1) an der Stelle des Kurses (6) der vom Piloten ausgewählten Route hindurch und zu beiden Seiten dieser Linie verläuft.

2. Vorrichtung nach Anspruch 1, dadurch gekennzeichnet, daß die Neigungsskala senkrecht zur künstlichen Horizontlinie (1) verläuft.

3. Vorrichtung nach Anspruch 1, dadurch gekennzeichnet, daß die Mittel zur Anzeige einer Neigungsskala an der Stelle des Kurses der ausgewählten Route eine Folge von Punkten (5) anzeigen, die sich durch die künstliche Horizontlinie (1) und zu deren beiden Seiten erstreckt.

4. Vorrichtung nach Anspruch 3, dadurch gekennzeichnet, daß die Punkte der Folge (5) gleiche Abstände gemäß einem Punktabstand unterhalb eines Neigungsgrads besitzen.

5. Vorrichtung nach Anspruch 3, dadurch gekennzeichnet, daß die Punkte der Folge (5) gleichmäßige Abstände gemäß einem Neigungsgrad besitzen und daß jeder fünfte Punkt dicker als die übrigen Punkte ist, um das Ablesen der Skala zu erleichtern.

## Claims

1. Optoelectronic device for assistance in the piloting of an aircraft that is provided with a navigation system (10) determining, inter alia, the heading, the pitch attitude and the roll attitude as well as the ground speed vector of the aircraft, and with a collimator (11) for displaying an artificial horizon line (1) graduated with a heading scale and surrounded by attitude bars giving a zero roll attitude and slope reference, a reticule (4) identifying the ground speed vector and a fixed reticule (2) formed by a miniature aircraft index identifying the heading and the pitch and roll attitudes of the aircraft with respect to the artificial horizon line, characterized in that the said device comprises means for displaying, on the collimator (11), a slope scale positioned across and on either side of the artificial horizon line (1), at the location of the heading (6) of the selected course chosen by the pilot.

2. Device according to Claim 1, characterized in that the said slope scale is perpendicular to the artificial horizon line (1).

3. Device according to Claim 1, characterized in that the said means for displaying a slope scale at the location of the heading of the selected course display a line of dots (5) across and on either side of the artificial horizon line (1).

4. Device according to Claim 3, characterized in that the dots of said line of dots (5) are evenly spaced out at a graduation spacing smaller than one degree of slope.

5. Device according to Claim 3, characterized in that the dots of said line of dots (5) are evenly spaced out at a spacing of one slope degree and in that the dots every five degrees of slope have a size greater than that of the running dots to ease reading of the scale.
